# EUROPÄISCHE PATENTSCHRIFT

(11) **EP 1 848 923 B1**
(45) Veröffentlichungstag und Bekanntmachung des Hinweises auf die Patenterteilung: **28.01.2009**
(21) Anmeldenummer: 06707056.5
(22) Anmeldetag: 17.02.2006
(51) Int. Cl.: F21V 21/28

(54) **LEUCHTE MIT EINEM STRAHLER UND VERSTELLBARE HALTEVORRICHTUNG FÜR EINEN STRAHLER**
LAMP COMPRISING A PROJECTOR, AND ADJUSTABLE HOLDING DEVICE FOR A PROJECTOR
LAMPE EQUIPEE D'UN PROJECTEUR ET DISPOSITIF DE FIXATION MOBILE POUR UN PROJECTEUR

(30) Priorität: 18.02.2005 DE 102005007711
(43) Veröffentlichungstag der Anmeldung: 31.10.2007
(73) Patentinhaber: Zumtobel Lighting GmbH & Co. KG, 32657 Lemgo (DE)
(72) Erfinder: DIXON, Roderick, Newton Aycliffe, DL5 4XB (GB); GOETZ-SCHAEFER, Katharina, 32107 Bad Salzuflen (DE); BERGMANN, Martin, A-1170 Wien (AT); GRÜNDL, Harald, A-1030 Wien (AT); BOHMANN, Gernot, A-1010 Wien (AT)
(74) Vertreter: Thun, Clemens
(86) Internationale Anmeldenummer: PCT/EP2006/001470
(87) Internationale Veröffentlichungsnummer: WO 2006/087216

(56) Entgegenhaltungen:
- DE-A1- 4 004 499
- DE-C- 632 879
- DE-C- 691 569
- US-A- 4 414 613
- US-A- 5 593 224
- US-A- 6 079 992

## Beschreibung

Die Erfindung betrifft eine Leuchte mit einem Strahler und eine verstellbare Haltevorrichtung für einen Strahler.

Im Gegensatz zu fest installierten Leuchten ist es bei Leuchten mit einem Strahler bekannt, letzteren durch eine Haltevorrichtung mit einem Gelenk zu halten, das zwischen einem an einem Basisteil befestigten Tragelement und einem Halteelement für mindestens einen Teil des Strahlers angeordnet ist. Dem Gelenk ist eine Klemmvorrichtung zu dessen Arretierung so zugeordnet, dass die Klemmkraft ausreicht, den Strahler in der eingestellten Position zu arretieren. Je nach Größe der vorhandenen Klemmkraft ist es bei einer solchen Klemmvorrichtung möglich, den Strahler durch manuelles Überdrücken der Klemmkraft der Klemmvorrichtung zu verstellen. Hierbei bedarf es jedoch eines manuellen Kraftaufwandes, der die Klemmvorrichtung überlasten kann und außerdem findet bei einer solchen Verstellung ein verhältnismäßig großer Reibungsverschleiß statt.

Aus der US 6,079,992 ist eine gattungsgemäße Strahlerleuchte bekannt, bei welcher die Klemmvorrichtung mittels einer Lösevorrichtung gelöst werden kann. Diese Lösevorrichtung kann über einen nach außen hervorstehenden Hebel betätigt werden, wobei allerdings gleichzeitig ein Festhalten des Strahlers mit einer weiteren Hand erforderlich ist.

Der Erfindung liegt nunmehr die Aufgabe zugrunde, eine Leuchte gemäß dem Oberbegriff des Anspruchs 1 oder eine Haltevorrichtung gemäß dem Oberbegriff des Anspruchs 4 so auszugestalten, dass sie handhabungsfreundlich verstellbar ist.

Diese Aufgabe wird durch die Merkmale des Anspruchs 1 oder 4 gelöst. Vorteilhafte Weiterbildungen der Erfindung sind in zugehörigen Unteransprüchen beschrieben.

Bei der Leuchte gemäß dem Anspruch 1 ist im Strahlergehäuse eine Lösevorrichtung angeordnet, mit der die Klemmkraft der Klemmvorrichtung verringerbar oder aufhebbar ist, wobei die Lösevorrichtung zu ihrer manuellen Betätigung von außerhalb des Strahlergehäuses her zugänglich ist. Hierdurch ist es möglich, die Klemmkraft der Klemmvorrichtung durch manuelle Betätigung aufzuheben oder zumindest soweit zu verringern, dass ein handhabungsfreundliches und bezüglich der Klemmvorrichtung oder dem Gelenk unschädliches Verstellen des Strahlers möglich ist. Diese Ausgestaltung ermöglicht somit ein handhabungsfreundliches und unschädliches Verstellen des Strahlers. Dabei wird eine lange Lebensdauer erreicht, weil ein Verschleiß vermieden oder wenigstens vermindert ist.

Die besondere Handhabungsfreundlichkeit wird erfindungsgemäß dadurch erreicht, dass die Lösevorrichtung von außerhalb des Strahlergehäuses direkt manuell betätigbar ist. Hierzu dient ein von außen zugängliches und z.B. in einer Öffnung des Strahlergehäuses angeordnetes Betätigungselement, dass direkt manuell ergreifbar bzw. betätigbar ist, wobei es in einem Abstand benachbart zu einem gehäusefesten Stützelement angeordnet ist. Diese Ausgestaltung ermöglicht es, beide Elemente z.B. mit zwei Fingern der Bedienungshand zu ergreifen und dabei das Betätigungselement gegen das Stützelement in seine Lösestellung zu bewegen. Hierbei kann gleichzeitig der Strahler verstellt werden, so dass es keines besonderen Zugriffs bedarf.

Bei der erfindungsgemäßen Ausgestaltung gemäß Anspruch 4 erlaubt das Gelenk ferner eine Verstellung um mindestens zwei Achsen, wobei Mittel zum manuellen und werkzeuglosen Lösen der Klemmvorrichtung nur für den Zeitpunkt der Verstellung des Gelenks vorgesehen sind. Diese Ausgestaltung ist auch dann vorteilhaft, wenn die Haltevorrichtung nicht in einem Gehäuse angeordnet ist. Auch diese Ausgestaltung zeichnet sich durch Handhabungsfreundlichkeit aus, wobei sich die Klemmvorrichtung durch direkten manuellen Eingriff nur für den Zeitpunkt der Verstellung lösen lässt, so dass nach dem manuellen Lösen die Klemmvorrichtung selbsttätig in Funktion tritt und das Gelenk arretiert.

Für die erfindungsgemäßen Ausgestaltungen eignet sich ein Kugelgelenk, das um beliebig viele Achsen räumlich verstellbar ist und einen großen Verstellbereich ermöglicht. Ein hinreichender Verstellbereich mit hinreichenden Verstellmöglichkeiten wird auch dann erreicht, wenn das Gelenk eine Verstellung nur um zwei Achsen erlaubt. Diese Achsen können z.B. rechtwinklig zueinander verlaufen, wie es bei einem Kugelgelenk der Fall ist, dessen Kugel zwischen zwei seitlich einander gegenüberliegenden Gelenkschalen gelagert und durch seitlichen Druck auf wenigstens eine der beiden Gelenkschalen klemmbar ist. Diese Klemmkraft lässt sich in einfacher Weise durch eine Feder, insbesondere eine Druckfeder erreichen. Bei einer solchen Klemmvorrichtung lässt sich durch ein Bewegen der druckbeaufschlagten Gelenkschale entgegen der Federkraft die Klemmvorrichtung lösen. Dies kann durch ein geeignetes Mittel, z.B. eine Lösevorrichtung, erfolgen.

An einer Leuchte der vorliegenden Art sind auch Anforderungen an ihr Aussehen gestellt, da sie auch in solchen Räumen brauchbar sein soll, die dem Aufenthalt von Menschen dienen. Aus diesem Grunde ist es vorteilhaft, die Haltevorrichtung für den Strahler soweit in einem Gehäuse anzuordnen, dass das Gelenk und die Klemmvorrichtung im Gehäuse aufgenommen und somit dem Blick des Betrachters entzogen sind.

Der Erfindung liegt deshalb im weiteren die Aufgabe zugrunde, eine Leuchte gemäß dem Oberbegriff des Anspruchs 20 so auszugestalten, dass bei Gewährleistung der Einstellbarkeit einer raumgünstigen Lichtabstrahlung eine einfache Konstruktion erreicht wird.

Diese Aufgabe wird durch die Merkmale des Anspruchs 20 gelöst. Vorteilhafte Weiterbildungen der Erfindung sind in zugehörigen Unteransprüchen beschrieben.

Bei der Leuchte gemäß Anspruch 20 erstreckt sich das Tragelement durch einen Schlitz im Strahlergehäuse, der sich in einer Seitenwand des Strahlergehäuses und durchgehend bis in eine der Abstrahlrichtung des Strahlers abgewandten Deckenwand des Strahlergehäuses hinein erstreckt. Diese Ausgestaltung ist deshalb einfach, weil es lediglich eines Schlitzes im Strahlergehäuse bedarf, um eine hinreichende Verstellung des Strahlers zu erreichen. Hierbei wird ein Verstellbereich erreicht, der sich bis zu zwei quer zueinander gerichteten Abstrahlrichtung erstreckt, die einen bis etwa rechten oder auch stumpfen Winkel zwischen sich einschließen.

Nachfolgend werden vorteilhafte Ausgestaltungen der Erfindung anhand von mehreren Ausführungsbeispielen und Zeichnungen näher erläutert. Es zeigt:
- Fig. 1: eine erfindungsgemäße Leuchte mit einem Strahler und einer verstellbaren Haltevorrichtung für den Strahler in perspektivischer Seitenansicht;
- Fig. 2: den Strahler in einer sog. Explosionszeichnung seiner teilweise demontierten Teile;
- Fig. 3: den Strahler in einer um etwa 180° verdrehten Position;
- Fig. 4: die Haltevorrichtung in perspektivischer Darstellung;
- Fig. 5: die Haltevorrichtung in der Draufsicht;
- Fig. 6: ein Gelenk der Haltevorrichtung in der Draufsicht, teilweise geschnitten.

Die Hauptteile der in ihrer Gesamtheit mit 1 bezeichneten Leuchte sind ein Basisteil 2 für den Anbau der Leuchte 1 an einem Träger, z.B. einem Gerät, einer Decke oder einer Wand, ein Strahler 3, von dem im eingeschalteten Zustand das Licht in eine Hauptabstrahlrichtung 4 abstrahlt und einer verstellbaren Haltevorrichtung 5, durch die der Strahler 3 mit dem Basisteil 2 verbunden und dadurch verstellbar getragen ist.

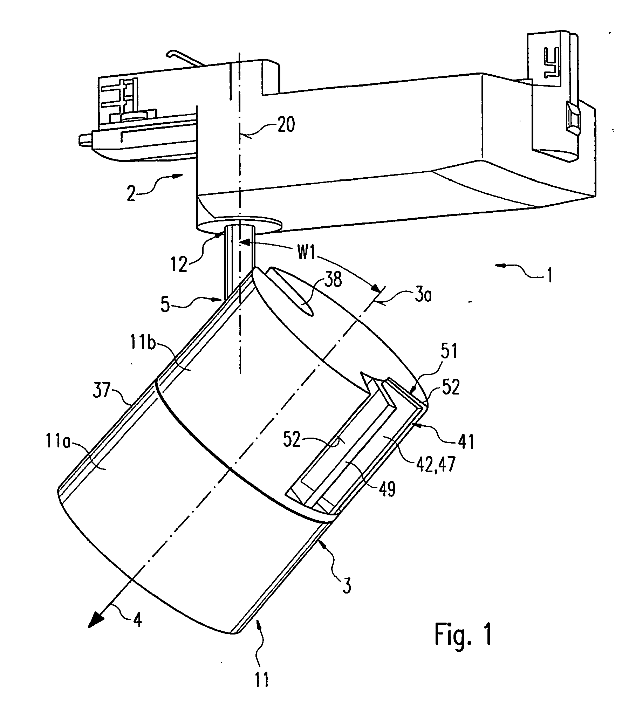

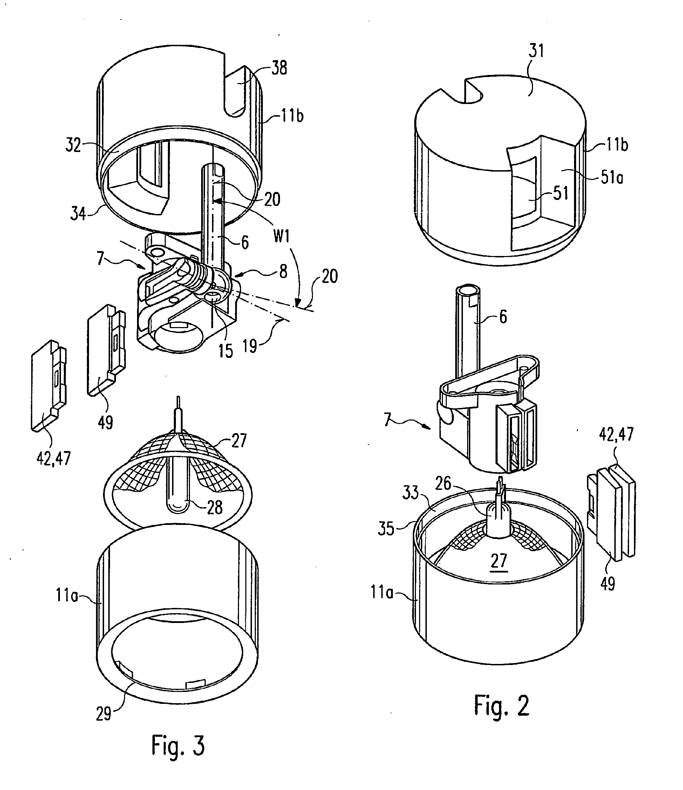

Die verstellbare Haltevorrichtung 5 besteht aus einem Tragelement 6, das am Basisteil 2 befestigt ist, einem Halteelement 7, an dem der Strahler 3 gehalten ist, ein Gelenk 8 zwischen dem Tragelement 6 und dem Halteelement 7 und eine Klemmvorrichtung 9 zur Arretierung des Gelenks 8 in seiner jeweiligen Gelenkstellung. Das Halteelement 7, das Gelenk 8 und die Klemmvorrichtung 9 befinden sich in einem Strahlergehäuse 11 und sind deshalb in Fig. 1 nicht sichtbar, jedoch in den Fig. 2 bis 5 sichtbar.

Das Tragelement 6 ist beim Ausführungsbeispiel ein längliches Bauteil, z.B. eine Stange mit einem insbesondere runden Querschnitt, vorzugsweise ein Rohr, das in einem etwa vertikalen und unterseitig ausmündenden Loch 12 im Basisteil 2 eingesteckt und in nicht dargestellter Weise befestigt ist. Im freien Endbereich kann das rohrförmige Tragelement 6 eine Schlüsselweite 13 aufweisen.

Das Gelenk 8 ist vorzugsweise ein Kugelgelenk mit einer Gelenkkugel 14, die am dem Basisteil 2 abgewandten Ende des rohrförmigen Tragelements 6 befestigt ist und deren Durchmesser größer ist als der Durchmesser des rohrförmigen Tragelements 6. Die Gelenkkugel 14 weist koaxial zur Rohrform ein Durchgangsloch 15 auf, wodurch mit dem Hohlraum des rohrförmigen Tragelements 6 ein Kabelkanal gebildet ist, durch den sich wenigstens ein nicht dargestelltes elektrisches Stromkabel zur im Strahlergehäuse 11 angeordneten Lichtquelle bzw. ein elektrisches Anschlussteil derselben, erstrecken kann.

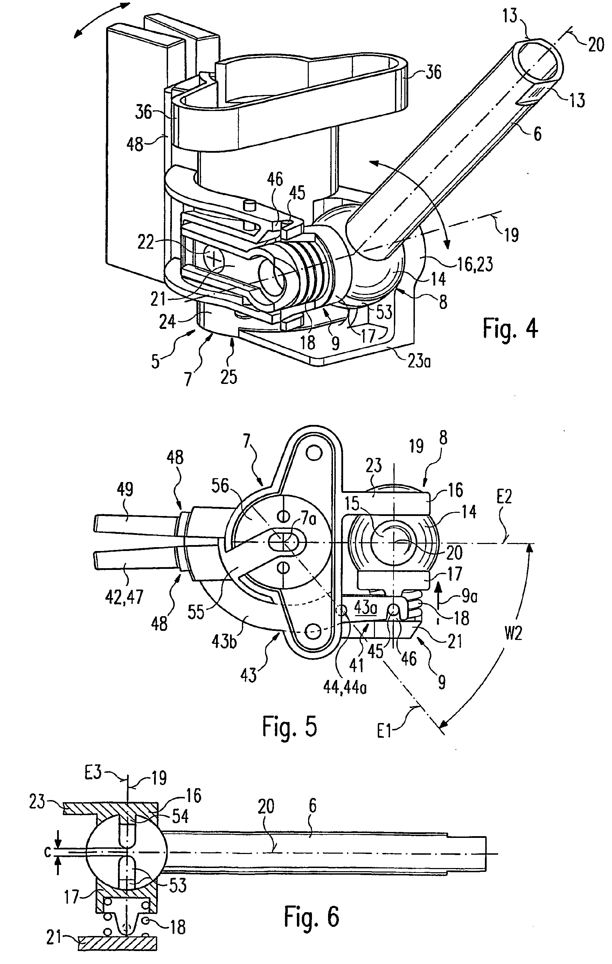

Das Gelenk 8 wird durch die Gelenkkugel 14 und zwei auf beiden Seiten der Gelenkkugel 14 angeordnete Gelenkschalen 16, 17 gebildet, von denen die in Fig. 4 vordere Gelenkschale 17 durch eine Feder 18, insbesondere eine Wendeldruckfeder, gegen die Gelenkkugel 14 vorgespannt ist. Durch diese Vorspannung wird das Gelenk 8 aufgrund der sich zwischen den Gelenkschalen 16, 17 und der Gelenkkugel 14 ergebenden Reibung in der jeweiligen Gelenkstellung arretiert.

Die Gelenkschalen 16, 17, definieren durch ihre kugelabschnittförmigen Schalenausnehmungen, in denen die Gelenkkugel 14 sitzt, eine erste Gelenkachse 19, die sich koaxial zu den Gelenkschalen 16,17 erstreckt. Die ebenfalls zur Gelenkachse 19 koaxial angeordnete Feder 18 ist an ihrem anderen Ende koaxial an einem Gelenksteg 21 abgestützt, der sich in der in Fig. 2 und 3 dargestellten vertikalen Grundstellung des Strahlers 3 horizontal vom Halteelement 7 erstreckt, an dem er z.B. durch eine Schraube 22 lösbar verschraubt ist. Eine zweite Gelenkachse 20 ist durch die sich auch durch die Gelenkachse 14 erstreckende Längsmittelachse des Tragelements 6 gebildet.

Die gegenübliegende Gelenkschale 16 kann einteilig mit einem auf jener Seite angeordneten Gelenksteg 23 ausgebildet sein, der sich z.B. ebenfalls einteilig vom Halteelement 7 erstreckt und mit dem Gelenksteg 21 eine Gelenkgabel bildet. Der Gelenksteg 23 kann an seinem unteren Rand durch einen an ihm und am Haltelement 7 einteilig angeformten horizontalen Verstärkungssteg 23a stabilisiert sein.

Das Halteelement 7 ist beim vorliegenden Ausführungsbeispiel ein hülsenförmiger Fassungskörper 24, der in der Grundstellung gemäß. Fig. 2 und 3 im horizontalen Querschnitt kreisrund ausgebildet ist und eine nach unten offene Steckfassung 25 aufweist, in die von unten ein Stecksockel 26 klemmend einsteckbar ist, auf den ein parabolförmiger Reflektor 27 aufgesteckt ist, und der eine im Hohlraum des Reflektors 27 angeordnete Lichtquelle 28 tragen kann oder durch diese gebildet sein kann. Der Reflektor 27 befindet sich im unteren Bereich des Strahlergehäuses 11, wobei er darin von oben eingesetzt und auf einem am unteren Rand angeordneten Tragsteg 29 aufliegen kann.

Beim vorliegenden Ausführungsbeispiel besteht das Strahlergehäuse 11 aus einem unteren Gehäuseteil 11a und einem oberen Gehäuseteil 11b, das mit einer oberseitigen Deckwand 31 kappenförmig ausgebildet ist. Die Gehäuseteile 11a, 11b sind im Bereich ihrer einander zugewandten Ränder zusammensteckbar und aneinander befestigbar. Hierzu kann das eine Gehäuseteil in seinem Randbereich eine Außenringnut 32 und das andere Gehäuseteil eine Innenringnut 33 aufweisen, die passend ineinander steckbar sind, so dass die beiden im Bereich der Ringnuten 32, 33 verjüngten Umfangswandabschnitte 34, 35 einander überlappen. Die Gehäuseteile 11a, 11b sind in ihren einander zugewandten Randbereichen durch eine im einzelnen nicht dargestellten Verbindungsvorrichtung, vorzugsweise eine Schnellschlussverbindung, z.B. eine Verrastungsvorrichtung oder ein Bajonettverschluss lösbar miteinander verbindbar.

Das Halteelement 7 ist im Strahlergehäuse, hier im wesentlichen im oberen Gehäuseteil 11b angeordnet und positioniert, z.B. formschlüssig. Am oberen Ende des Fassungskörpers 24 können ein oder mehrere Flanschteile 36 angeformt sein, die aus Gewichtsersparnisgründen hohl ausgebildet sein können und z.B. der Positionierung oder auch Befestigung des Halteelements 7 im Strahlergehäuse 11 dienen können.

Wie insbesondere Fig. 4 und 5 zeigen, befindet sich das Gelenk 8 außenseitig an der hülsenförmigen Umfangswand des Fassungskörpers 24. An dieser Anordnungsstelle ist genügend Freiraum für eine Schwenkbewegung der Haltevorrichtung 5 relativ zum Tragelement 6 um einen verhältnismäßig großen Winkel W1 von z.B. etwa 90° oder einen stumpfen Winkel W1 vorhanden, wie es Fig. 3 beispielhaft zeigt.

Die Haltevorrichtung 5 passt mit dem Gelenk 6 in den freien Hohlraum des Strahlergehäuses 11 bzw. des oberen Gehäuseteils 11b, wobei in der Umfangswand 37 und in der Deckwand 31 ein Schlitz 38 angeordnet ist, der breiter ist als die Querschnittsabmessung des rohrförmigen Tragelements 6. In der Deckwand 31 entspricht das Schlitzende der aufrechten Position des rohrförmigen Halteelement 6, und in der Umfangswand 37 entspricht das Schlitzende der Position des rohrformige Tragelements 6 der gegenüberliegenden Winkelposition des z.B. stumpfen Winkels W1 gemäß Fig. 3. In der montierten Stellung der Leuchte 1 gemäß Fig. 1 ist somit der Strahler 3 mit seiner Hauptabstrahlrichtung 4 so verschwenkbar, dass in der nach unten geschwenkten Stellung der Hauptabstrahlrichtung 4 seine Mittelachse 3a etwa parallel zur vertikalen zweiten Gelenkachse 20 verläuft und in der anderen Schwenkstellung mit seitlich gerichteter Hauptabstrahlrichtung 4 einen spitzen bis stumpfen Winkel W1 mit der zweiten Gelenkachse 20 einschließt. In der Stellung gemäß Fig. 1 ist dieser Winkel W1, in der die Hauptabstrahlrichtung 4 schräg nach unten gerichtet ist, spitz. Bei einem rechten oder stumpfen Winkel W1 ist die Hauptabstrahlrichtung 4 horizontal oder schräg nach oben gerichtet, was nicht dargestellt ist.

Die Klemmkraft der Feder 18 bzw. Klemmvorrichtung 9 ist so groß, dass zum einen der Strahler 3 in jeder eingestellten Position gegen eine ungewollte Verstellung arretiert ist. Dabei kann wobei eine Verstellung handhabungsfreundlich durch ein manuelles Überdrücken der durch die Klemmkraft 9a erzeugten Reibung erfolgen.

Die soweit beschriebene Leuchte 1 weist die Nachteile auf, dass zum einen die Klemmkraft manuell überdrückt werden muss und zum anderen dabei Verschleiß im Gelenk stattfindet. Um diese Nachteile zu vermeiden, weist die Haltevorrichtung 5 eine Lösevorrichtung 41 mit einem manuell betätigbaren Betätigungselement 42 auf, mit der die Klemmkraft der Klemmvorrichtung 9 verringerbar oder völlig aufhebbar ist, so dass die Verstellung des Strahlers 3 zum einen handhabungsfreundlicher mit geringer Kraft und zum anderen ohne einen unter der Klemmkraft wirksamen Verschleiß im Gelenk 8 erfolgen kann.

Beim Ausführungsbeispiel wirkt die Lösevorrichtung 41 auf das durch die Kraft der Feder 18 gegen die Gelenkkugel 14 vorgespannte Klemmelement, das hier durch die Gelenkschale 17 gebildet ist. Bei einer Betätigung der Lösevorrichtung 41 wird die Gelenkschale 17 gegen die Kraft der Feder 18 beaufschlagt, was zu einer Verringerung der Klemmkraft führt. Wenn die Gelenkschale 17 abhebt, ist die Klemmkraft völlig aufgehoben.

Beim Ausführungsbeispiel weist die Lösevorrichtung 41 einen doppelarmigen Lösehebel 43 auf, der sich am Umfang des Halteelements 7, hier des Fassungskörpers 24, quer zur Mittelachse 7a des Haltelements erstreckt und in der Nähe des Umfangs des Halteelements 7 in einem Gelenk 44 um eine Gelenkachse 44a so schwenkbar gelagert ist, dass sein der Klemmvorrichtung 9 zugewandter Hebelarm 43a längs der Wirkrichtung des Klemmelements der Klemmvorrichtung bewegbar ist. Beim Ausführungsbeispiel erstreckt sich die Gelenkachse 44a parallel zur Mittelachse 7a des Halteelements 7, wobei der Hebelarm 43a sich rechtwinklig zur ersten Gelenkachse 19 erstreckt und an der Gelenkschale 17 angreift. Vorzugsweise sind zwei gabelförmige Hebelarme 43a vorgesehen, die unter- und oberseitig des Gelenkstegs 21 angeordnet und auf einem dem Gelenksteg 21 durchsetzenden Gelenkbolzen schwenkbar gelagert sind. Die freien Enden der Hebelarme 43a sind jeweils durch eine Zapfenverbindung mit der Gelenkschale 17 verbunden. Beim Ausführungsbeispiel stehen von der Gelenkschale 17 einander gegenüberliegend Mitnahmebolzen 45 ab, die von den Hebelarmen 43a hintergriffen werden, vorzugsweise mit Ausnehmungen 46, die in die der Klemmrichtung 9a entgegengesetzte Richtung offen sind.

In der Draufsicht gemäß Fig. 5 gesehen befindet sich das Gelenk 44 in einer die Mittelachse 7a des Halteelements 7 enthaltenden Ebene E1, die mit einer die Mittelachse 7a und die zweite Gelenkachse 20 enthaltenden Ebene E2 einen spitzen Winkel W2 von etwa 45° einschließt.

Vom Gelenk 44 erstreckt sich ein langer Hebelarm 43b zur dem Gelenk 8 gegenüberliegenden Seite des Halteelements 7, wobei er vorzugsweise der Krümmung des Fassungskörpers 24 folgt und somit eine kleine Konstruktion ermöglicht. Am freien Ende des Hebelarms 43b befindet sich ein Betätigungselement 42 in Form eines zur dem Gelenk 8 entgegengesetzten Seite abstehenden aufrechten Stegs 47, der durch eine Verbindungsvorrichtung 48, z.B. eine Steckverbindung, mit dem freien Ende des langen Hebelarms 43b lösbar verbunden ist. Durch eine Druckbetätigung parallel zur Klemmrichtung 9a wird die Gelenkschale 17 entgegen der Feder 18 bewegt, wodurch die Klemmwirkung reduziert oder aufgehoben wird.

Um die manuelle Betätigung weiter zu vereinfachen, ist dem Steg 47 in einem Abstand gegenüberliegend ein Stützsteg 49 angeordnet, der vom Halteelement 7, hier vom Fassungskörper 24, absteht und z.B. ebenfalls durch eine Verbindungsvorrichtung 48 lösbar mit dem Halteelement 7 oder einem Anbauteil desselben verbunden ist. Der Stützsteg 49 ermöglicht eine handhabungsfreundliche Betätigung des Betätigungselements 42 dadurch, dass der Steg 47 gegen den Stützsteg 49 gedrückt wird, z.B. durch zwei Finger einer Bedingungshand. Hierbei ist eine bequeme Einhandbedienung möglich, wobei gleichzeitig der Strahler 3 geschwenkt werden kann.

Im Strahlergehäuse 11, hier im oberen Gehäuseteil 11b, ist insbesondere in der dem Gelenk 8 gegenüberliegenden Seite eine z.B. viereckige Öffnung 51 vorhanden, durch die der Steg 47 oder - wenn vorhanden - auch der Stützsteg 49 sich so weit nach außen erstreckt, bzw. erstrecken, dass die manuelle Zugänglichkeit und Betätigung von außen möglich ist. Hierdurch ist es möglich, die Haltevorrichtung 5 vollständig in einem Gehäuse, hier dem Strahlergehäuse 11 zu verkleiden und zu schützen. Außerdem erhält die Leuchte 1 durch diese Verkleidung ein gutes Aussehen im Sinne einer gehobenen Ausstattung.

Um das Aussehen der Leuchte außerdem weiter zu verbessern ist es vorteilhaft, die Öffnung 51 insgesamt oder als stufenförmig erweiterte Öffnung 51a so groß auszubilden, dass zwischen den einander abgewandten Seiten der Stege 47, 49 soviel Freiraum 52 (Fig. 1) vorhanden ist, dass darin bei der Betätigung eingegriffen werden kann, z.B. mit den beiden Fingern der Bedienungshand. Bei einer solchen Ausgestaltung können die Stege 47, 49 innerhalb der Öffnung 51 enden, sie brauchen nicht über den Umfang des Strahlergehäuses 11 hinauszuragen.

Um ein Überdrehen des sich durch das rohrförmige Tragelement 6 erstreckenden nicht dargestellten Kabels beim Drehen des Strahlers 3 um die zweite Gelenkachse 20 zu vermeiden, ist es vorteilhaft, die Drehbarkeit des Gelenks 8 um diese zweite Gelenkachse 20 zu begrenzen. Dies wird dadurch erreicht, dass in der Gelenkkugel 14 in einer sich quer zur zweiten Gelenkachse 20 erstreckenden Ebene E3 eine Nut 53 angeordnet ist, in die ein Zapfen 54 von einem der Gelenkschalen, hier der Gelenkschale 16 einfasst. Wie aus Fig. 6 zu entnehmen ist, ist die Nut 53 nicht umlaufend sondern sie erstreckt sich über ein Winkelbereich von weniger als 360° so dass ihre Enden den in Fig. 6 dargestellten Abstand c voneinander haben.

Die wenigstens eine Verbindungsvorrichtung 48 ist vorhanden, um die Montage der Haltevorrichtung 5 im Strahlergehäuse 11 zu erleichtern oder zu ermöglichen. Es ist nämlich möglich, die Haltevorrichtung 5 ohne den oder die Stege 47, 49 im Strahlergehäuse 11 zu montieren und den oder die Stege 47, 49 nach der Montage von außen zu montieren.

Die Anordnung des Stützstegs 49 hat den weiteren Vorteil, dass mit der Bedienungshand nicht nur beide Stege 47, 49 handhabungsfreundlich ergriffen und die Lösevorrichtung 41 betätigt werden kann, sondern es wird auch ein sicheres Ergreifen des Strahlers 3 insgesamt erreicht, so dass dieser in die gewünschte Abstrahlrichtung (Fig. 4 geschwenkt werden kann. Nach dem Loslassen des Stegs 47 gelangt die Klemmvorrichtung 9 aufgrund der Kraft der Feder 18 selbsttätig in ihrer Klemmstellung in der sie den Strahler 3 arretiert.

Die Umfangswand des Fassungskörpers 24 kann auf der dem Gelenk 8 gegenüberliegenden Seite einen vertikal durchgehenden Schlitz 55 aufweisen, der sich beim Vorhandensein einer oberen Querwand 56 bis in deren mittleren Bereich erstrecken kann. Der Schlitz 55 kann z. B. der seitlichen Einführung eines elektrischen Kabels dienen. Der Schlitz 55 befindet sich insbesondere im Endbereich des längeren Hebelarms 43b. Aufgrund der seitlich offenen Ausnehmungen 46 ist es nämlich möglich, den Doppelhebel 43 in Fig. 5 nach unten zu schwenken, wobei er den Schlitz 55 für einen Zugang freigibt. Dies ist möglich, weil der bzw. die kurzen Hebelarme 43a wegen offenen Ausnehmungen 46 gleichzeitig zur Ebene E2 hin schwenken und wieder zu den Mitnehmerbolzen 45 zurückschwenken können.

## Patentansprüche

1. Leuchte (1) mit einem Strahler (3) und einer verstellbaren Haltevorrichtung (5), durch die der Strahler (3) mit einem Basisteil (2) der Leuchte (1) verbunden ist, wobei die Haltevorrichtung (5),
- ein längliches Tragelement (6),
- ein Halteelement (7) mindestens für einen Teil des Strahlers (3),
- ein Gelenk (8) zwischen dem Tragelement (6) und dem Halteelement (7) und
- eine Klemmvorrichtung (9) zur Arretierung des Gelenks (8) aufweist,
wobei das Gelenk (8) und die Klemmvorrichtung (9) in einem Strahlergehäuse (11) angeordnet sind,
wobei ferner im Strahlergehäuse (11) eine Lösevorrichtung (41) angeordnet ist, mit der die Klemmkraft der Klemmvorrichtung (9) verringerbar oder aufhebbar ist, und
wobei die Lösevorrichtung (41) zu ihrer manuellen Betätigung von außerhalb des Strahlergehäuses (11) her zugänglich ist,
**dadurch gekennzeichnet,**
**dass** die Lösevorrichtung (41) sich durch eine Öffnung (51) im Strahlergehäuse (11) erstreckt und im Bereich der Öffnung (51) ein manuell betätigbares Betätigungselement (42) aufweist, und
**dass** in einem Abstand neben dem Betätigungselement (42) ein gehäusefestes Stützelement (49) angeordnet ist, wobei das Betätigungselement (42) durch ein Übergreifen beider Elemente (42, 49) mit zwei Fingern einer Bedienungshand gegen das Stützelement (49) bewegbar ist.

2. Leuchte nach Anspruch 1,
**dadurch gekennzeichnet,**
**dass** das Tragelement (6) sich durch einen Schlitz (38) im Strahlergehäuse (11) erstreckt, der sich in der Schwenkebene des Gelenks (8) in einer Seitenwand des Strahlergehäuses (11) durchgehend bis in eine der Abstrahlrichtung (4) abgewandten Deckenwand (31) des Strahlergehäuses (11) hinein erstreckt.

3. Leuchte nach einem der vorherigen Ansprüche,
**dadurch gekennzeichnet,**
**dass** das Gelenk (8) eine Verstellung um mindestens zwei Achsen (19, 20) erlaubt und
**dass** Mittel (42) zum manuellen und werkzeuglosen Lösen der Klemmvorrichtung (9) nur für den Zeitpunkt der Verstellung des Gelenks (8) vorgesehen sind.

4. Verstellbare Haltevorrichtung (5) für einen Strahler (3) mit
- einem Tragelement (6),
- einem Halteelement (7) mindestens für einen Teil des Strahlers (3),
- einem Gelenk (8) zwischen dem Tragelement (6) und dem Halteelement (7) und
- einer Klemmvorrichtung (9) zur Arretierung des Gelenks (8) in seiner jeweiligen Gelenkstellung,
wobei das Gelenk (5) eine Verstellung um mindestens zwei Achsen (19, 20) erlaubt und wobei eine Lösevorrichtung (41) zum manuellen und werkzeuglosen Lösen der Klemmvorrichtung (9) nur für den Zeitpunkt der Verstellung des Gelenks (8) vorgesehen sind,
**dadurch gekennzeichnet,**
**dass** die Lösevorrichtung (41) sich durch eine Öffnung (51) in einem Strahlergehäuse (11) erstreckt und im Bereich der Öffnung (51) ein manuell betätigbares Betätigungselement (42) aufweist, und
**dass** in einem Abstand neben dem Betätigungselement (42) ein gehäusefestes Stützelement (49) angeordnet ist, wobei das Betätigungselement (42) durch ein Übergreifen beider Elemente (42, 49) mit zwei Fingern einer Bedienungshand gegen das Stützelement (49) bewegbar ist.

5. Haltevorrichtung nach Anspruch 4,
**dadurch gekennzeichnet,**
**dass** das Tragelement (6) sich durch einen Schlitz (38) im Strahlergehäuse (11) erstreckt, der sich in der Schwenkebene des Gelenks (8) in einer Seitenwand des Strahlergehäuses (11) durchgehend bis in eine der Abstrahlrichtung (4) abgewandten Deckenwand (31) des Strahlergehäuses (11) hinein erstreckt.

6. Leuchte oder Haltevorrichtung nach einem der vorherigen Ansprüche,
**dadurch gekennzeichnet,**
**dass** das Gelenk (8) auf einer Seite des Halteelements (7) angeordnet ist und das Betätigungselement (42) auf der gegenüberliegenden Seite des Halteelement (7) angeordnet ist.

7. Leuchte oder Haltevorrichtung nach einem der vorherigen Ansprüche,
**dadurch gekennzeichnet,**
**dass** die Öffnung (51) so groß ist, dass zwischen ihr und dem Betätigungselement (42) oder auch dem Stützelement (49) jeweils ein so großer Freiraum (52) vorhanden ist, dass darin jeweils mit einem Finger eingefasst werden kann.

8. Leuchte oder Haltevorrichtung nach Anspruch 6 oder 7,
**dadurch gekennzeichnet,**
**dass** die Lösevorrichtung (41) einen doppelarmigen Lösehebel (43) aufweist, der um ein Hebelgelenk (44) schwenkbar gelagert ist und dass das Betätigungselement (42) am Ende des einen Hebelarmes (43b) angeordnet ist und der andere Hebelarm (43a) mit einen Klemmteil der Klemmvorrichtung (9) zusammenwirkt.

9. Leuchte oder Haltevorrichtung nach Anspruch 8,
**dadurch gekennzeichnet,**
**dass** das Hebelgelenk (44) auf der Seite des Halteelements (7) angeordnet ist, auf der sich das Gelenk (8) befindet.

10. Leuchte oder Haltevorrichtung nach einem der vorherigen Ansprüche,
**dadurch gekennzeichnet,**
**dass** das Halteelement (7) durch einen hülsenförmigen Fassungskörper (24) gebildet ist, der vorzugsweise in seinem einen Endbereich eine Querwand aufweist.

11. Leuchte oder Haltevorrichtung nach einem der vorherigen Ansprüche 8 bis 10,
**dadurch gekennzeichnet,**
**dass** das Halteelement (7) eine runde Querschnittsform aufweist und der das Betätigungselement (42) tragende Hebelarm (43b) der Krümmung des Halteelements (7) folgend gekrümmt ist.

12. Leuchte oder Haltevorrichtung nach einem der vorherigen Ansprüche,
**dadurch gekennzeichnet,**
**dass** das Tragelement (6) eine Stange, vorzugsweise ein Rohr, ist.

13. Leuchte oder Haltevorrichtung nach einem der vorherigen Ansprüche,
**dadurch gekennzeichnet,**
**dass** das Gelenk (8) eine Gelenkkugel (14) aufweist, die am zugewandten Ende des Tragelements (6) befestigt ist und die mit zwei aneinander gegenüberliegenden Seiten der Gelenkkugel (14) angeordneten Gelenkschalen (16,17) klemmbar zusammenwirkt.

14. Leuchte oder Haltevorrichtung nach Anspruch 13,
**dadurch gekennzeichnet,**
**dass** die Gelenkkugel (14) ein mit dem Rohr fluchtendes Durchgangsloch (15) aufweist.

15. Leuchte oder Haltevorrichtung nach Anspruch 13 oder 14,
**dadurch gekennzeichnet,**
**dass** eine der beiden Gelenkschalen (17) beweglich gelagert ist und durch die Kraft einer Feder (18) gegen die Gelenkkugel (14) vorgespannt ist.

16. Leuchte oder Haltevorrichtung nach Anspruch 15,
**dadurch gekennzeichnet,**
**dass** die durch die Federkraft vorgespannte Gelenkschale (17) durch eine Betätigung der Lösevorrichtung (41) oder des Mittels gegen die Wirkrichtung der Feder (18) bewegbar ist.

17. Leuchte oder Haltevorrichtung nach einem der Ansprüche 13 bis 16,
**dadurch gekennzeichnet,**
**dass** die beiden Achsen (19, 20) im wesentlichen rechtwinklig zueinander verlaufen und vorzugsweise die eine Achse (19) durch die gemeinsame Mittelachse der Gelenkschalen (16, 17) und die andere Achse (20) durch die Längsachse des Tragelements (6) definiert sind.

18. Leuchte oder Haltevorrichtung nach einem der vorherigen Ansprüche 13 bis 17,
**dadurch gekennzeichnet,**
**dass** die Drehbarkeit der Gelenkkugel (14) im Gelenk (8) auf einen Drehwinkel begrenzt ist, der kleiner ist als 360°.

19. Leuchte oder Haltevorrichtung nach Anspruch 18,
**dadurch gekennzeichnet,**
**dass** die Gelenkkugel (14) in einer sich rechtwinklig zur Mittelachse des Tragelements (6) erstreckenden Ebene eine Nut (53) aufweist, die sich über einen Winkel erstreckt, der kleiner ist als 360°, und dass in die Nut ein Zapfen (54) einfasst, der mittelbar fest mit dem Halteelement (7) verbunden ist, vorzugsweise von der Gelenkschale (16) vorragt, die auf der der Feder (18) gegenüberliegenden Seite der Gelenkkugel (14) angeordnet ist.

20. Leuchte (1) mit einem Strahler (3) und einer verstellbaren Haltevorrichtung (5), durch die der Strahler (3) mit einem Basisteil (2) der Leuchte (1) verbunden ist, wobei die Haltevorrichtung (5)
- ein längliches Tragelement (6),
- ein Halteelement (7) mindestens für einen Teil des Strahlers (3),
- ein Gelenk (8) zwischen dem Tragelement (6) und dem Halteelement (7) und
- eine Klemmvorrichtung (9) zur Arretierung des Gelenks (8) aufweist,
wobei das Gelenk (8) und die Klemmvorrichtung (9) in einem Strahlergehäuse (11) angeordnet sind,
**dadurch gekennzeichnet,**
**dass** das Tragelement (6) sich durch einen Schlitz (38) im Strahlergehäuse (11) erstreckt, der sich in der Schwenkebene des Gelenks (8) in einer Seitenwand des Strahlergehäuses (11) durchgehend bis in eine der Abstrahlrichtung (4) abgewandten Deckenwand (31) des Strahlergehäuses (11) hinein erstreckt.

## Claims

1. A luminaire (1) having a spotlight (3) and an adjustable holding device (5) by means of which the spotlight (3) is connected to a base part (2) of the luminaire (1), wherein the holding device (5) has
- an oblong carrying element (6),
- a holding element (7) at least for a portion of the spotlight (3),
- an articulated joint (8) between the carrying element (6) and the holding element (7), and
- a clamping device (9) for locking the articulated joint (8),
the articulated joint (8) and the clamping device (9) being disposed in a spotlight housing (11),
there furthermore being disposed in the spotlight housing (11) a release device (41) by means of which the clamping force of the clamping device (9) can be reduced or removed, and
the release device (41) being accessible from outside the spotlight housing (11) in order that it can be operated manually,
**characterized in that**
the release device (41) extends through an aperture (51) in the spotlight housing (11) and has a manually operable actuating element (42) in the region of the aperture (51), and
a supporting element (49) which is solid with the housing is disposed at a distance next to the actuating element (42), the actuating element (42) being movable towards the supporting element (49) by gripping both elements (42, 49) together by two fingers of an operating hand.

2. A luminaire according to Claim 1,
**characterized in that**
the carrying element (6) extends through a slot (38) in the spotlight housing (11), this slot being continuous in a side wall of the spotlight housing (11) in the pivoting plane of the articulated joint (8), extending as far as into a top wall (31) of the spotlight housing (11) that faces away from the radiation direction (4).

3. A luminaire according to one of the preceding claims,
**characterized in that**
the articulated joint (8) permits adjustment about at least two axes (19, 20), and means (42) are provided for manually releasing the clamping device (9) without the use of tools only for the time of adjustment of the articulated joint (8).

4. An adjustable holding device (5) for a spotlight (3), having
- a carrying element (6),
- a holding element (7) at least for a portion of the spotlight (3),
- an articulated joint (8) between the carrying element (6) and the holding element (7), and
- a clamping device (9) for locking the articulated joint (8) in its respective articulation position, wherein the articulated joint (5) permits adjustment about at least two axes (19, 20), and a release means (41) is provided for manually releasing the clamping device (9) without the use of tools only for the time of adjustment of the articulated joint (8),
**characterized in that**
the release device (41) extends through an aperture (51) in a spotlight housing (11) and has a manually operable actuating element (42) in the region of the aperture (51), and
a supporting element (49) which is solid with the housing is disposed at a distance next to the actuating element (42), the actuating element (42) being movable towards the supporting element (49) by gripping both elements (42, 49) together by two fingers of an operating hand.

5. A holding device according to Claim 4,
**characterized in that**
the carrying element (6) extends through a slot (38) in the spotlight housing (11), this slot being continuous in a side wall of the spotlight housing (11) in the pivoting plane of the articulated joint (8), extending as far as into a top wall (31) of the spotlight housing (11) that faces away from the radiation direction (4).

6. A luminaire or holding device according to one of the preceding claims,
**characterized in that**
the articulated joint (8) is disposed on one side of the holding element (7) and the actuating element (42) is disposed on the opposite side of the holding element (7).

7. A luminaire or holding device according to one of the preceding claims,
**characterized in that**
the aperture (51) is of a size such that between it and the actuating element (42) or, also, between it and the supporting element (49), there is a respective free space (52) which is of a size such that a finger can be inserted in each case.

8. A luminaire or holding device according to Claim 6 or 7,
**characterized in that**
the release device (41) has a double-armed release lever (43) which is mounted so as to be pivotable about a lever joint (44), and the actuating element (42) is disposed at the end of the one lever arm (43b) and the other lever arm (43a) cooperates with a clamping part of the clamping device (9).

9. A luminaire or holding device according to Claim 8,
**characterized in that** the lever joint (44) is disposed on the side of the holding element (7) on which the articulated joint (8) is located.

10. A luminaire or holding device according to one of the preceding claims,
**characterized in that** the holding element (7) is constituted by a sleeve-type receptacle body (24), which preferably has a transverse wall in one of its end regions.

11. A luminaire or holding device according to one of the preceding Claims 8 to 10,
**characterized in that** the holding element (7) has a round cross-sectional form, and the lever arm (43b) carrying the actuating element (42) is curved to follow the curvature of the holding element (7).

12. A luminaire or holding device according to one of the preceding claims,
**characterized in that**
the carrying element (6) is a rod, preferably a tube.

13. A luminaire or holding device according to one of the preceding claims,
**characterized in that** the articulated joint (8) has an articulated-joint ball (14) which is attached to the facing end of the carrying element (6) and which cooperates in a clamping manner with two articulated-joint shells (16, 17) disposed on mutually opposing sides of the articulated-joint ball (14).

14. A luminaire or holding device according to Claim 13,
**characterized in that**
the articulated-joint ball (14) has a through-hole (15) in alignment with the tube.

15. A luminaire or holding device according to
Claim 13 or 14,
**characterized in that** one of the two articulated-joint shells (17) is mounted so as to be movable, and is biased by the force of a spring (18) against the articulated-joint ball (14).

16. A luminaire or holding device according to Claim 15,
**characterized in that**
the articulated-joint shell (17) biased by the spring force can be moved against the direction of action of the spring (18) by actuation of the release device (41) or of the means.

17. A luminaire or holding device according to one of
Claims 13 to 16,
**characterized in that** the two axes (19, 20) run essentially at right angles to each other, and preferably the one axis (19) is defined by the common central axis of the articulated-joint shells (16, 17) and the other axis (20) is defined by the longitudinal axis of the carrying element (6).

18. A luminaire or holding device according to one of the preceding Claims 13 to 17,
**characterized in that** the extent to which the articulated-joint ball (14) can rotate in the articulated joint (8) is limited to a rotational angle which is smaller than 360°.

19. A luminaire or holding device according to Claim 18,
**characterized in that**
the articulated-joint ball (14) has a groove (53) in a plane extending at right angles to the central axis of the carrying element (6), this groove extending over an angle which is smaller than 360°, and there is engaged in the groove a stud (54) which is indirectly fixed to the holding element (7) and preferably projects from the articulated-joint shell (16) disposed on the side of the articulated-joint ball (14) that is opposite the spring (18).

20. A luminaire (1) having a spotlight (3) and an adjustable holding device (5) by means of which the spotlight (3) is connected to a base part (2) of the luminaire (1), wherein the holding device (5) has
- an oblong carrying element (6),
- a holding element (7) at least for a portion of the spotlight (3),
- an articulated joint (8) between the carrying element (6) and the holding element (7), and
- a clamping device (9) for locking the articulated joint (8),
the articulated joint (8) and the clamping device (9) being disposed in a spotlight housing (11),
**characterized in that**
the carrying element (6) extends through a slot (38) in the spotlight housing (11), this slot being continuous in a side wall of the spotlight housing (11) in the pivoting plane of the articulated joint (8), extending as far as into a top wall (31) of the spotlight housing (11) that faces away from the radiation direction (4).

## Revendications

1. Lampe (1) équipée d'un projecteur (3) et d'un dispositif de fixation (5) mobile par lequel le projecteur (3) est relié à un élément de base (2) de la lampe (1), dans lequel le dispositif de fixation (5) présente,
- un élément support (6) allongé,
- un élément de fixation (7) au moins pour un élément du projecteur (3),
- une articulation (8) entre l'élément support (6) et l'élément de fixation (7) et
- un dispositif de serrage (9) servant à bloquer l'articulation (8),
dans lequel l'articulation (8) et le dispositif de serrage (9) sont agencés dans un boîtier de projecteur (11),
dans lequel un dispositif de desserrage (41), avec lequel la force de serrage du dispositif de serrage (9) peut être diminuée ou supprimée, est agencé en outre dans le boîtier de projecteur (11) et dans lequel le dispositif de desserrage (41) est accessible pour son actionnement manuel depuis l'extérieur du boîtier de projecteur (11),
**caractérisée en ce**
**que** le dispositif de desserrage (41) s'étend à travers une ouverture (51) dans le boîtier de projecteur (11) et présente un élément d'actionnement (42) actionnable manuellement au niveau de l'ouverture (51), et
**qu'**un élément d'appui (49) fixé au boîtier est agencé à une certaine distance à côté de l'élément d'actionnement (42), dans lequel l'élément d'actionnement (42) peut être déplacé contre l'élément d'appui (49) par un recouvrement des deux éléments (42, 49) à l'aide de deux doigts d'une main d'actionnement.

2. Lampe selon la revendication 1,
**caractérisée en ce**
**que** l'élément support (6) s'étend à travers une fente (38) dans le boîtier de projecteur (11), qui s'étend dans le plan de pivotement de l'articulation (8) dans une paroi latérale du boîtier de projecteur (11) de bout en bout jusque dans une paroi de recouvrement (31) du boîtier de projecteur (11) opposée au sens de rayonnement (4).

3. Lampe selon l'une quelconque des revendications précédentes,
**caractérisée en ce**
**que** l'articulation (8) permet un déplacement autour d'au moins deux axes (19, 20) et en ce que des moyens (42) sont prévus pour le desserrage manuel et sans outil du dispositif de serrage (9) seulement au moment du déplacement de l'articulation (8).

4. Dispositif de fixation (5) mobile pour un projecteur (3) comportant
- un élément support (6),
- un élément de fixation (7) au moins pour un élément du projecteur (3),
- une articulation (8) entre l'élément support (6) et l'élément de fixation (7) et
- un dispositif de serrage (9) servant à bloquer l'articulation (8) dans sa position d'articulation correspondante,
dans lequel l'articulation (5) permet un déplacement autour d'au moins deux axes (19, 20) et dans lequel un dispositif de desserrage (41) est prévu pour le desserrage manuel et sans outil du dispositif de serrage (9) seulement au moment du déplacement de l'articulation (8)
**caractérisé en ce**
**que** le dispositif de desserrage (41) s'étend à travers une ouverture (51) dans un boîtier de projecteur (11) et présente un élément d'actionnement (42) actionnable manuellement au niveau de l'ouverture (51) et
en ce qu'un élément d'appui (49) fixé au boîtier est agencé à une certaine distance à côté de l'élément d'actionnement (42), dans lequel l'élément d'actionnement (42) peut être déplacé contre l'élément d'appui (49) par un recouvrement des deux éléments (42, 49) à l'aide de deux doigts d'une main d'actionnement.

5. Dispositif de fixation selon la revendication 4,
**caractérisé en ce**
**que** l'élément support (6) s'étend à travers une fente (38) dans le boîtier de projecteur (11), qui s'étend dans le plan de pivotement de l'articulation (8) dans une paroi latérale du boîtier de projecteur (11) de bout en bout jusque dans une paroi de recouvrement (31) du boîtier de projecteur (11) opposée au sens de rayonnement (4).

6. Lampe ou dispositif de fixation selon l'une quelconque des revendications précédentes,
**caractérisés en ce**
**que** l'articulation (8) est agencée sur un côté de l'élément de fixation (7) et l'élément d'actionnement (42) est agencé sur le côté opposé de l'élément de fixation (7).

7. Lampe ou dispositif de fixation selon l'une quelconque des revendications précédentes,
**caractérisés en ce**
**que** l'ouverture (51) est si grande qu'il y a respectivement entre elle et le dispositif d'actionnement (42) ou bien l'élément d'appui (49), un espace libre (52) si grand que l'on peut y mettre respectivement un doigt.

8. Lampe ou dispositif de fixation selon la revendication 6 ou 7,
**caractérisés en ce**
**que** le dispositif de desserrage (41) présente un levier de desserrage (43) à deux bras qui est logé de manière pivotante autour d'une articulation de levier (44) et que l'élément d'actionnement (42) est agencé à l'extrémité d'un des bras de levier (43b) et l'autre bras de levier (43a) coopère avec un élément de serrage du dispositif de serrage (9).

9. Lampe ou dispositif de fixation selon la revendication 8,
**caractérisés en ce**
**que** l'articulation de levier (44) est agencée sur le côté de l'élément de fixation (7) sur lequel se trouve l'articulation (8).

10. Lampe ou dispositif de fixation selon l'une quelconque des revendications précédentes,
**caractérisés en ce**
**que** l'élément de fixation (7) est formé par un corps de douille (24) en forme de gaine, qui présente de préférence dans sa zone d'extrémité une paroi transversale.

11. Lampe ou dispositif de fixation selon l'une quelconque des revendications précédentes 8 à 10,
**caractérisés en ce**
**que** l'élément de fixation (7) présente une section transversale de forme arrondie et le bras de levier (43b) portant l'élément d'actionnement (42) est incurvé en suivant la courbure de l'élément de fixation (7).

12. Lampe ou dispositif de fixation selon l'une quelconque des revendications précédentes,
**caractérisés en ce**
**que** l'élément support (6) est une barre, de préférence un tube.

13. Lampe ou dispositif de fixation selon l'une quelconque des revendications précédentes,
**caractérisés en ce**
**que** l'articulation (8) présente une rotule d'articulation (14), qui est fixée à l'extrémité adjacente de l'élément support (6) et qui coopère par serrage avec deux coques d'articulation (16, 17) agencées à des côtés se faisant face de la rotule d'articulation (14).

14. Lampe ou dispositif de fixation selon la revendication 13,
**caractérisés en ce**
**que** la rotule d'articulation (14) présente un trou de passage (15) aligné avec le tube.

15. Lampe ou dispositif de fixation selon la revendication 13 ou 14,
**caractérisés en ce**
**qu'**une des deux coques d'articulation (17) est agencée de manière mobile et est précontrainte contre la rotule d'articulation (14) par la force d'un ressort (18).

16. Lampe ou dispositif de fixation selon la revendication 15,
**caractérisés en ce**
**que** la coque d'articulation (17) précontrainte par la force de ressort peut être déplacée dans le sens opposé au sens d'action du ressort (18) par un actionnement du dispositif de desserrage (41) ou du moyen.

17. Lampe ou dispositif de fixation selon l'une quelconque des revendications 13 à 16,
**caractérisés en ce**
**que** les deux axes (19, 20) s'étendent de manière essentiellement perpendiculaire l'un par rapport à l'autre et un des axes (19) est défini de préférence par l'axe médian commun des coques d'articulation (16, 17) et l'autre axe (20) est défini par l'axe longitudinal de l'élément support (6).

18. Lampe ou dispositif de fixation selon l'une quelconque des revendications précédentes 13 à 17,
**caractérisés en ce**
**que** la faculté de rotation de la rotule d'articulation (14) dans l'articulation (8) est limitée à un angle de rotation, qui est inférieur à 360°.

19. Lampe ou dispositif de fixation selon la revendication 18,
**caractérisés en ce**
**que** la rotule d'articulation (14) présente dans un plan s'étendant perpendiculairement à l'axe médian de l'élément support (6), une rainure (53), qui s'étend sur un angle qui est inférieur à 360° et qu'un téton (54) est inséré dans la rainure lequel est fixé indirectement à l'élément de fixation (7), dépasse de préférence de la coque d'articulation (16), qui est agencée sur le côté de la rotule d'articulation (14) opposé au ressort (18).

20. Lampe (1) équipée d'un projecteur (3) et d'un dispositif de fixation (5) mobile par lequel le projecteur (3) est relié à un élément de base (2) de la lampe (1), dans lequel le dispositif de fixation (5) présente,
- un élément support (6) allongé,
- un élément de fixation (7) au moins pour un élément du projecteur (3),
- une articulation (8) entre l'élément support (6) et l'élément de fixation (7) et
- un dispositif de serrage (9) servant à bloquer l'articulation (8),
dans lequel l'articulation (8) et le dispositif de serrage (9) sont agencés dans un boîtier de projecteur (11),
**caractérisée en ce**
**que** l'élément support (6) s'étend à travers une fente (38) dans le boîtier de projecteur (11), qui s'étend dans le plan de pivotement de l'articulation (8) dans une paroi latérale du boîtier de projecteur (11) de bout en bout jusque dans une paroi de recouvrement (31) du boîtier de projecteur (11) opposée au sens de rayonnement (4).
